Europäisches Patentamt

European Patent Office

Office européen des brevets

(19)

(11) Numéro de publication : **0 012 060**
**B1**

(12) **FASCICULE DE BREVET EUROPÉEN**

(45) Date de publication du fascicule du brevet :
13.07.83

(21) Numéro de dépôt : **79400880.5**

(22) Date de dépôt : **16.11.79**

(51) Int. Cl.³ : **G 01 S  3/78**, G 01 S 17/66,
F 41 G  7/22

(54) **Système de détection optoélectrique et de localisation angulaire d'un objet lumineux.**

(30) Priorité : **24.11.78 FR 7833289**

(43) Date de publication de la demande :
**11.06.80 Bulletin 80/12**

(45) Mention de la délivrance du brevet :
**13.07.83 Bulletin 83/28**

(84) Etats contractants désignés :
**DE GB IT NL SE**

(56) Documents cités :
**EP A 0 004 227**
**FR A 2 334 079**
**FR A 2 367 291**
**FR A 2 387 459**
**US A 3 858 046**
**US A 4 009 393**
**US A 4 107 529**

(73) Titulaire : **THOMSON-CSF**
**173, Boulevard Haussmann**
**F-75379 Paris Cedex 08 (FR)**

(72) Inventeur : **Couderc, Georges**
**"THOMSON-CSF" - SCPI 173, bld Haussmann**
**F-75360 Paris Cedex 08 (FR)**
Inventeur : **Cojan, Yves**
**"THOMSON-CSF" - SCPI 173, bld Haussmann**
**F-75360 Paris Cedex 08 (FR)**
Inventeur : **Bargues, Denis**
**"THOMSON-CSF" - SCPI 173, bld Haussmann**
**F-75360 Paris Cedex 08 (FR)**

(74) Mandataire : **Trocellier, Roger et al**
**THOMSON-CSF SCPI 173, Bld Haussmann**
**F-75379 Paris Cedex 08 (FR)**

Jouve, 18, rue St-Denis, 75001 Paris, France

## Système de détection optoélectrique et de localisation angulaire d'un objet lumineux

La présente invention concerne des perfectionnements à un système de détection optoélectrique et de localisation angulaire d'objet lumineux dans lequel les fonctions de filtrage spatial et de modulation dues à des grilles mobiles sont séparées de celle d'écartométrie.

Un système de ce type est décrit dans les documents de brevet de la même famille FR-A-2 420 144 et EP-A-0 004 227. Les grilles sont déterminées pour produire une modulation du faisceau de réception à une fréquence désirée. Le détecteur utilisé est du type à quatre quadrants. Une optique intermédiaire dite d'écartométrie est placée entre les grilles situées dans le plan focal de l'optique réceptrice et le détecteur, en sorte de former une tache image d'un certain diamètre sur le plan photosensible de détection. Cet agencement permet de désolidariser mécaniquement l'ensemble optique réceptrice-grilles de la partie optique d'écartométrie-détecteur située en aval. En utilisant notamment une optique d'écartométrie du type demi-boule dont le centre de courbure coïncide sensiblement avec le centre du détecteur à quatre quadrants, il est possible de produire un mouvement relatif des grilles par rapport au détecteur, par rotation autour de ce centre. Ce système s'applique avantageusement à la réalisation d'un autodirecteur infrarouge passif.

Les perfectionnements, objet de la présente invention, concernent l'obtention d'un fonctionnement bimode, semi-actif ou passif, pour le système au lieu d'un simple fonctionnement passif.

En fonctionnement passif, la modulation du signal est produite par le mouvement de rotation du support des grilles de filtrage spatial et de modulation.

En fonctionnement semi-actif, la modulation du signal est produite au niveau d'un émetteur de lumière annexe, généralement un laser, illuminant la cible à détecter. Le laser peut être à émission continue ou par impulsion.

Le document de brevet US-A-4 107 529 divulgue un réticule tournant spectralement sélectif destiné à un système de détection d'un objet lumineux, qui comporte sur un demi-cercle des secteurs alternativement transparents et opaques aux rayons infrarouges compris dans une première bande spectrale, mais transparents aux rayons compris dans une autre bande et correspondant à un rayonnement laser.

Le document de brevet US-A-4 009 393 divulgue un système de détection et de poursuite d'un objet lumineux, qui utilise une optique décentrée pour produire un balayage en rosette et deux détecteurs pour répondre à deux spectres de radiation et pour sélectionner, par traitement des signaux détectés, celui des deux spectres qui est le plus approprié.

Selon l'invention telle que revendiquée, il est proposé de réaliser un système de détection optoélectrique et de localisation angulaire d'un objet lumineux destiné à fonctionner en bi-mode, à savoir mode passif et mode semi-actif comportant un objectif optique de réception et de focalisation, un disque tournant disposé dans le plan focal et muni de grilles formées de zones transparentes et opaques pour produire en mode passif une modulation liée à la vitesse de rotation, un filtre optique, un dispositif photodétecteur du rayonnement modulé, et des circuits de traitement et d'écartométrie des signaux détectés élaborant les signaux d'écart représentatifs du dépointage angulaire de l'objet par rapport à l'axe optique, et dans lequel un objectif intermédiaire dit d'écartométrie est disposé entre les grilles et le détecteur, celui-ci étant du type à quatre quadrants pour élaborer les signaux d'écart à partir des signaux respectifs des quadrants et consécutivement séparer la fonction d'écartométrie de celles de filtrage spatial et de modulation procurées par les grilles, les circuits de traitement et d'écartométrie comportant quatre voies de réception issues du détecteur à quatre quadrants et traitées par sommations dans un circuit d'écartométrie pour produire les signaux conventionnels $\Delta x$, $\Delta y$ et $\Sigma$ d'écartométrie, ces derniers étant transmis respectivement à trois circuits de démodulation correspondant à la modulation créée par les grilles, le système étant caractérisé en ce que les grilles sont réalisées de manière à être totalement transparentes pour le rayonnement produit par un illuminateur laser annexe modulé selon une modulation distincte de celle créée par les grilles, et qu'il comporte des circuits de traitement additionnels pour démoduler les signaux laser détectés, ainsi que des circuits de commutation et de sélection des modes de fonctionnement passif et semi-actif pour l'obtention des données d'écartométrie correspondantes.

Les particularités et avantages de l'invention apparaîtront au cours de la description qui suit donnée à titre d'exemple non limitatif à l'aide des figures annexées qui représentent :

les figures 1 à 4, des schémas de rappel du type de système de détection et de localisation concerné par l'invention, ces schémas représentant respectivement, un diagramme général simplifié, un schéma du dispositif détecteur photoélectrique utilisé, un schéma de réalisation des grilles de filtrage spatial et de modulation, et un schéma partiel simplifié du système aménagé en sorte de produire une rotation relative entre les grilles et le détecteur ;

la figure 5, une coupe d'un exemple de réalisation du disque selon la figure 3 aménagé selon l'invention ;

la figure 6, un diagramme détaillé d'un exemple de réalisation des circuits électroniques de traitement et d'écartométrie aménagés selon l'invention ;

la figure 7, un diagramme général d'un deuxième mode de réalisation des circuits électroniques ; et

la figure 8, une variante de réalisation du dispositif détecteur selon les figures 2 et 4.

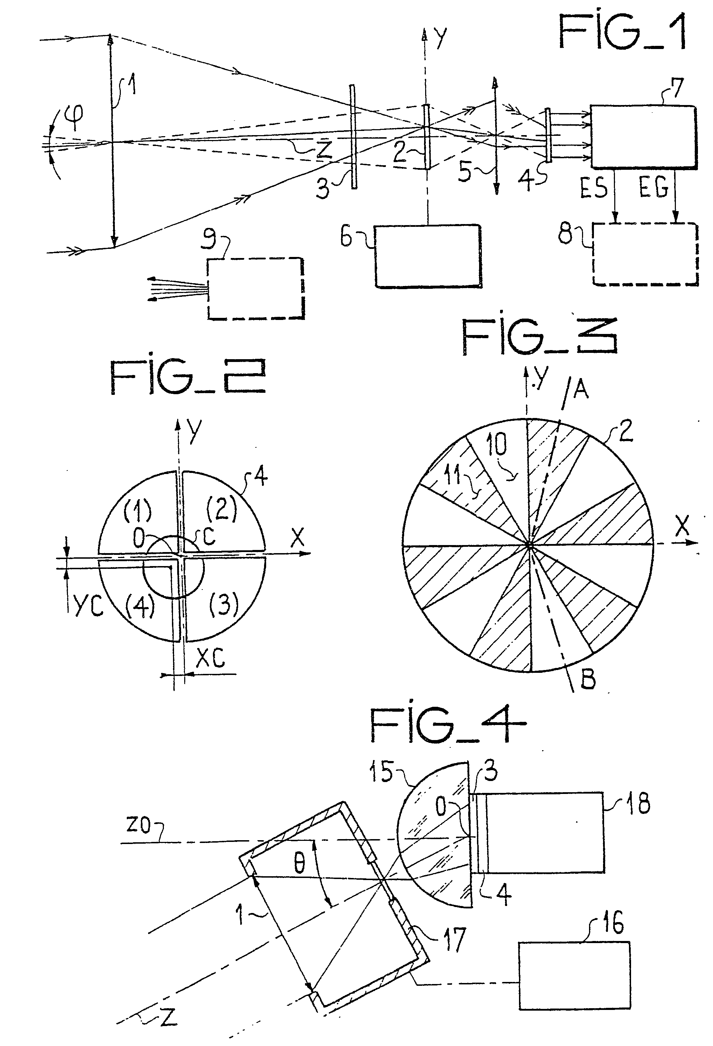

Un système de détection et d'écartométrie du type concerné par l'invention est rappelé dans ce qui suit à l'aide des figures 1 à 3.

Sur le diagramme général figure 1 se trouvent reportés les éléments essentiels de la combinaison formant le système de détection et de localisation. Ces éléments comprennent : un objectif optique de réception 1, symbolisé par une lentille, qui assure, la focalisation du rayonnement reçu dans le champ observé d'ouverture centré sur l'axe optique Z, un dispositif de balayage à grilles 2 situé dans le plan focal correspondant de l'objectif et produisant les fonctions filtrage spatial et modulation, un filtre optique 3 interposé sur le trajet des rayons pour filtrer le rayonnement inclus dans la bande utile exploitée, et un dispositif détecteur photoélectrique 4. Celui-ci est disposé à distance du plan des grilles et un objectif optique intermédiaire 5 transpose l'image du champ au niveau d'un plan voisin de celui de détection pour produire une tache image de diamètre déterminé sur le plan de détection. Le bloc 6 symbolise un dispositif d'entraînement des grilles 2.

Le dispositif détecteur 4 est du type détecteur à quatre quadrants connectés respectivement à des circuits de réception 7 comportant quatre voies d'entrée. Les signaux détectés sont démodulés en fonction de la modulation créée par les grilles et traités par sommation et différence pour produire les signaux d'écartométrie correspondant à l'écart en site ES et à l'écart en gisement EG de la cible parrapport à l'axe de visée optique Z ; ils sont transmis à une unité d'exploitation annexe 8. Le détecteur à quatre quadrants (1) (2) (3) (4) est représenté à titre de rappel sur la figure 2. Les signaux d'écartométrie ES et EG correspondent respectivement aux coordonnés YC et XC du centre de la tache image C de cible par rapport aux axes cartésiens OX et OY de référence. Le point O centre du détecteur, correspond à la trace de l'axe optique Z perpendiculaire au plan détecteur.

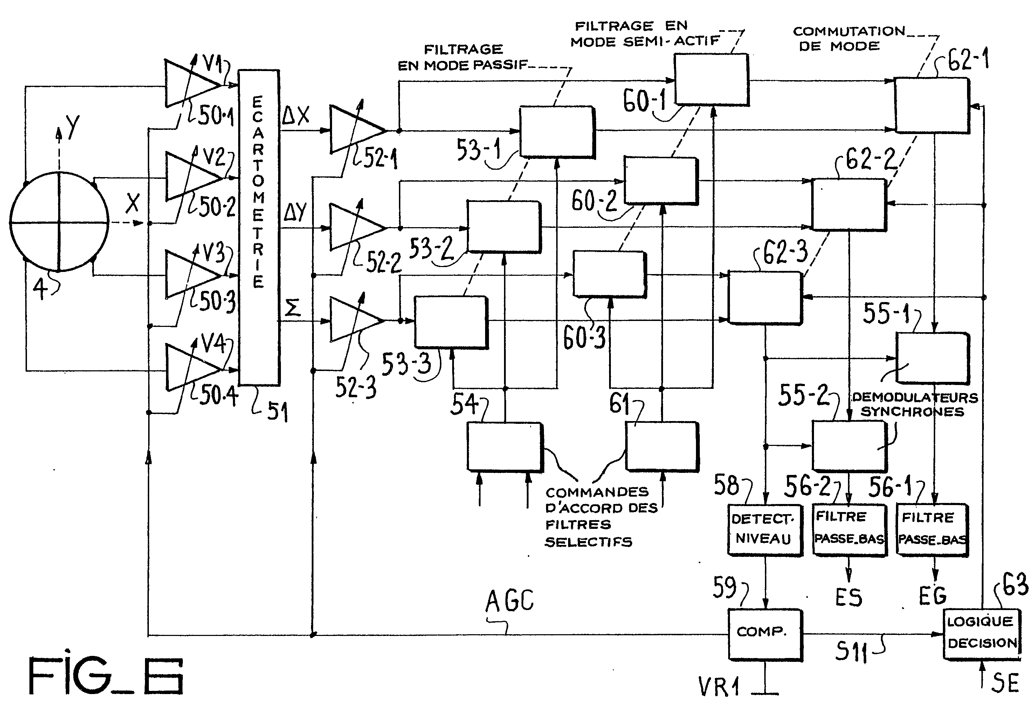

Les grilles mobiles 2 peuvent être réalisées sous forme d'une ou plusieurs pistes circulaires portant des zones opaques et transparentes pour produire une ou plusieurs modulations correspondantes du faisceau focalisé. « Le déplacement circulaire peut être assimilé à un déplacement linéaire de direction X dans la zone focale, la direction X correspondant généralement au gisement. De même, les zones opaques et transparentes incluses dans la zone focale peuvent être considérées comme parallèles à la direction Y perpendiculaire à X et qui correspond au site ». Sans préjudice pour l'invention et afin de simplifier l'exposé, on considérera dans ce qui suit que le support des grilles est un disque centré sur l'axe optique cette version étant compacte et plus aisément intégrable dans un système autodirecteur ; on conviendra également dans le même esprit que le disque comporte comme le représente la figure 3 une piste unique formée de secteurs transparents 10 et opaques 11 alternés et de même dimension pour moduler le faisceau à une fréquence F1 qui dépend du nombre de secteurs et de la vitesse de rotation instantanée autour de l'axe Z.

La figure 4 rappelle un aménagement du système permettant de mettre à profit la séparation des fonctions laquelle autorise un découplage mécanique entre la partie optique de réception-grilles et la partie optique intermédiaire-détecteur. L'optique intermédiaire dite d'écartométrie est déterminée en sorte de préserver la même fonction de transposition d'image lorsque le positionnement relatif entre les parties précitées se trouve modifié par un mouvement de rotation autour du centre O du plan détecteur. L'optique d'écartométrie est réalisée sous forme d'une lentille plan-convexe 15 dite demi-boule dont le centre de courbure de la face convexe coïncide avec le centre instantané de rotation O et dont la face plane constitue un plan diamétral, ou sensiblement, de la sphère correspondante centrée en O.

Le montage autorise un débattement angulaire spatial θ important entre l'axe optique Z et l'axe Zo normal au plan de détection en O. Le mouvement relatif est produit par des moyens d'entraînement 16 de l'une des parties par rapport à l'autre. Dans l'exemple figuré, l'ensemble 1-2 est rendu solidaire par une structure mécanique 17 qui est entraînée en rotation autour du point O pour produire le dépointage θ désiré entre les axes Z et Zo ; en outre, les grilles 2 sont entraînées en rotation autour de l'axe Z et le dispositif 16 peut être conçu pour produire complémentai-rement cette rotation par entraînement de l'ensemble 1-2 par la structure 17.

Suivant ce montage le flux lumineux provenant de la cible est constant au niveau de la détection, les signaux détectés sur chaque quadrant du détecteur 4 sont indépendants du dépointage θ et la mesure d'écartométrie reste inchangée.

Dans le cadre de l'application à un autodirecteur, l'ensemble objectif 1 et grilles 2 est avantageusement rendu solidaire de la partie tournante ou toupie d'un gyroscope, le détecteur 4 et le filtre 3 étant solidaire de la rotule centrale du gyroscope. Un cryostat 18 permet de refroidir le détecteur et le filtre. Un exemple correspondant de réalisation est décrit dans les documents de brevet FR-A-2 420 144 et EP-A-004 227 déjà cités auxquels on pourra se reporter pour les détails.

Les aménagements apportés selon l'objet de l'invention au système selon les figures 1 à 3 ou selon la figure 4, pour permettre un fonctionnement bimode, passif ou semi-actif, sont décrits dans ce qui suit.

Pour permettre un fonctionnement semi-actif, une source lumineuse annexe conventionnelle dite illuminateur est prévue afin d'illuminer l'objet ou cible à détecter. Cette source est avantageusement constituée par un laser et est symbolisée par le bloc 9 sur la figure 1. L'émission lumineuse s'effectue sur une longueur d'onde déterminée ou dans une bande spectrale restreinte, elle peut être continue ou à impulsions. L'émetteur 9 est équipé pour produire une émission modulée en intensité. De manière préférée, quoique non limitative, l'émission est continue et la modulation s'effectue par tout ou rien à une fréquence F2 déterminée distincte de celle F1 produite par les grilles 2 en fonctionnement passif. Ainsi la démodulation correspondant à F2 peut s'opérer par un simple filtrage. Les valeurs F1 et F2 sont choisies premières entre elles. Dans le cas d'un laser pulsé, la modulation peut s'effectuer, par exemple, selon un code binaire avec suppression d'impulsions ou inversion de phase de la porteuse et la démodulation utilise un circuit de décodage correspondant.

Les aménagements autorisant le fonctionnement bimode sont produits essentiellement au niveau des grilles de filtrage spatial et des circuits de traitement.

Les secteurs formant les grilles se présentent alternativement opaque et transparent vis à vis du rayonnement utile à détecter en mode passif ; ils sont déterminés en sorte d'être tous transparents au rayonnement laser prévu en mode semi-actif. Ceci est obtenu en réalisant les secteurs opaques de manière à ce qu'ils constituent un filtre optique interférentiel qui transmet une bande spectrale très fine correspondant à la longueur d'onde du laser. Les grilles peuvent être réalisées comme schématisé sur la vue en coupe figure 5 en utilisant un disque support 12 en matériau transparent pour les fréquences de rayonnement prévues pour les deux modes, un verre par exemple, et en effectuant par dépôt de couches minces les secteurs 11. Les dépôts peuvent être produits par exemple par évaporation sous vide.

La figure 6 représente un exemple de réalisation des circuits de traitement et d'écartométrie dans le cas d'un laser continu modulé à une fréquence F2. Les circuits utilisés en fonctionnement passif sont rappelés ci-après, ils comportent : des circuits préamplificateurs 50-1 à 50-4, un circuit d'écartométrie 51 élaborant les voies différences $\Delta x$, $\Delta y$ et la voie somme $\Sigma$, des circuits amplificateurs 52-1 à 52-3, des circuits de démodulation 53-1 à 53-3 du type filtre asservi à commande numérique commandée à partir d'un circuit 54 pour être accordés sur la fréquence de modulation F1 résultant de la vitesse de rotation du disque (Figure 3), des circuits démodulateurs synchrones 55-1 et 55-2 recevant le signal somme filtré et des circuits filtre passe-bas 56-1 et 56-2 effectuant une post-intégration. En outre, le contrôle de gain des préamplificateurs et amplificateurs est obtenu en appliquant le signal de la voie somme filtré à un détecteur de niveau 58 puis à un comparateur 59 à un seuil VR1. La sortie analogique du comparateur constitue le signal de CAG. Ce montage s'applique à un autodirecteur et est décrit dans le détail dans les documents de brevet FR-A-2 420 144 et EP-A-0 004 277 précités.

Les aménagements apportés selon l'invention pour assurer le fonctionnement semi-actif consistent en une deuxième série de circuits filtres sélectifs 60-1 à 60-3 alimentés respectivement par les sorties d'amplificateurs pour démoduler la fréquence de modulation F2 du signal laser renvoyé par l'objet illuminé et détecté. Les filtres 60-1 à 60-3 sont de préférence également du type asservi à commande numérique et commandée par un circuit 61 de manière à ajuster l'accord à la fréquence laser choisie. Ce dernier peut consister par exemple en une mémoire morte 61 recevant de l'opérateur l'affichage du code de modulation (fréquence F2 dans cet exemple) de l'émetteur annexe. La mémoire 61 délivre le signal numérique de commande d'accord correspondant vers les filtres 60-1 à 60-3. Les deux filtres de chaque voie sont connectés en aval à travers un circuit commutateur 62-1, 62-2, 62-3 respectivement, pour sélectionner l'un ou l'autre selon le mode de fonctionnement. La commande des circuits de commutation s'effectue à partir d'une logique de choix de mode 63. Cette logique de décision 63 peut être réalisée pour assurer une sélection prioritaire externe du mode passif ou semi-actif pour le guidage de l'autodirecteur ou bien, pour produire une sélection interne en l'absence de sélection externe. La sélection interne étant basée sur des critères de qualités des signaux reçus, signaux infrarouge en mode passif et signaux laser en mode semi-actif. Par exemple, le mode laser étant prioritaire une perte du signal écho laser qui se traduit par le passage de 1 à 0 de la sortie numérique S 11 du comparateur 59 provoquera automatiquement le passage en mode IR passif ou réciproquement. Dans cette version représentée, le signal SE constitue une commande prioritaire externe, sa valeur 1 ou 0 est transmise aux commutateurs *via* la logique 63 qui peut être aisément réalisée à partir d'un circuit porte OU.

La configuration de circuits qui vient d'être décrite permet par exemple un fonctionnement bimode ; IR passif 3 à 5 $\mu$m et laser continu modulé 3,8 $\mu$m. Si l'on envisage le même fonctionnement avec un laser à impulsions brèves, le détecteur reste encore commun pour les deux modes mais le traitement électronique doit être doublé. Le diagramme de la figure 7 en donne la structure générale qui comporte une chaîne de traitement 21 analogue à celle décrite pour le fonctionnement passif, une chaîne de traitement 22 du signal laser, un circuit logique de choix de mode 23 et un circuit commutateur 24 de sélection des données analogiques d'écartométrie laser ou IR selon le choix effectué. La chaîne de traitement 22 doit permettre le prélèvement des niveaux crête des impulsions à la cadence laser pour obtenir les signaux nécessaires à l'évaluation des données d'écartométrie ; une réalisation de ce genre est décrite dans le document de brevet FR-A-2 293 714. Le circuit logique de décision 23 est réalisé pour assurer comme précédemment une sélection prioritaire externe de l'un ou l'autre mode par le signal SE et une sélection interne en fonction de la qualité des signaux reçus lors de la poursuite (passage 1 à 0 du signal numérique de présence écho S11, ou d'un signal équivalent S12 élaboré par la chaîne 22 en mode laser). La sortie S13 du circuit de décision commande le commutateur 24 pour prélever les signaux d'écart EGP et ESP de la voie IR en passif ou ceux EGL et ESL de la voie laser en semi-actif, selon le cas.

Dans les exemples précédents la longueur d'onde laser est incluse dans la bande de fonctionnement passif. Le choix d'une longueur d'onde laser extérieure à cette bande est envisageable moyennant un doublage de la détection et du traitement des signaux.

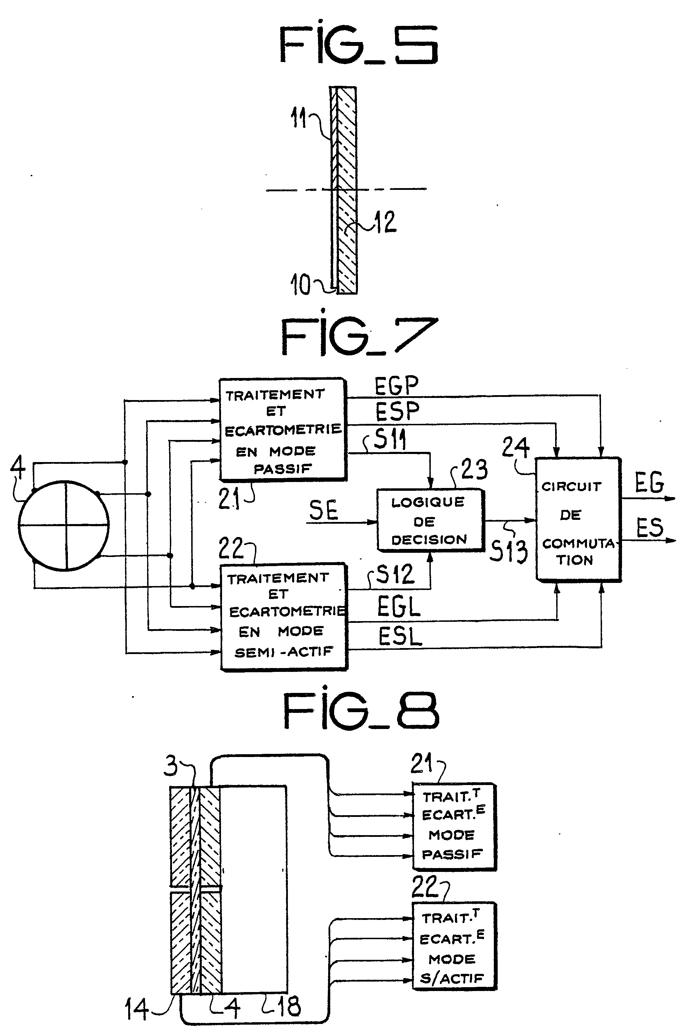

La figure 8 représente un aménagement du dispositif détecteur permettant de séparer la détection laser et la détection IR en vue d'un fonctionnement bi-spectral. La détection IR s'effectue par l'ensemble 3-4 déjà décrit (figure 4) refroidi par un cryostat 18. La détection laser s'effectue par un deuxième détecteur quatre quadrants formé par une couche 14 en un matériau sensible au rayonnement laser et déposée à l'avant du filtre froid 3. Cet exemple de réalisation convient par un fonctionnement bimode et bi-spectral IR passif 3 à 5 µm et laser YAG 1,064 µm. Les sorties respectives des détecteurs sont transmises à des chaînes de traitement distinctes analogues aux circuits 21 et 22 précédents dans le cas d'une émission laser à impulsions. Pour le fonctionnement envisagé, la couche détectrice 14 peut être en Silicium (Si), la couche détectrice 4 en Antimoniure d'Indium (In Sb) et la couche filtrante 1R 3 réalisée sur un matériau Silicium (Si).

Les perfectionnements décrits ont mis en évidence la faculté de transformer un système de détection et d'écartométrie initialement prévu en infrarouge passif en un système travaillant en mode laser semi-actif sans qu'il soit nécessaire de modifier la structure opto-mécanique du senseur optique. Les modifications dans le cas d'un autodirecteur n'affectent pas l'optique de réception portée ou non par un gyroscope, ni l'optique intermédiaire d'écartométrie, ni le détecteur et son cryostat, ni le gyroscope et son électronique de commande et son dispositif de lancement ; en outre la majeure partie de l'électronique de traitement est conservée telle quelle.

Les matériaux constituant le ou les détecteurs 4-14, les objectifs 1 et 15 sont choisis en relation avec la raie laser et la bande de fonctionnement passif, afin d'assurer une compatibilité satisfaisante des paramètres sensibilité spectrale des détecteurs et transmission optique avec les longueurs d'ondes prévues. L'illuminateur laser peut être du type D. F. (Deuthérium-Fluor, 3,8 µm), YAG (1,064 µm), ou $CO^2$ (10,6 µm) etc... Les optiques peuvent être en verres IRG 11 SCHOTT, en Silicium ou en Germanium, ou des verres conventionnels dans le visible. Les détecteurs peuvent être en matériau In Sb, Si, PbS, Hg Cd Te, Pb Sn Te, etc...

Dans le cas de l'émission laser continue, la fréquence de modulation du laser est choisie en dehors du domaine des fréquences de modulation créées par les grilles pour obtenir un bon découplage des deux modes et éliminer l'influence du fond ambiant dans le mode laser. Il est entendu que les modulations peuvent être faites selon des codages plus complexes et démodulées par filtrage adapté ou corrélation ou décodage.

Les commutations électroniques de mode de fonctionnement peuvent être réalisées dans le cas d'un autodirecteur en fonction des critères ci-après : commutation manuelle du choix opérationnel autoritaire sur l'un ou l'autre mode avant utilisation, ou commutation automatique en cours d'utilisation en fonction de la qualité des signaux, ou encore commutation préalable sur un mode préférentiel maintenu en cours d'utilisation tant que le signal correspondant présente une qualité suffisante.

**Revendications**

1. Système de détection optoélectrique et de localisation angulaire d'un objet lumineux destiné à fonctionner en bi-mode, à savoir mode passif et mode semi-actif, comportant un objectif optique (1) de réception et de focalisation, un disque (2) tournant disposé dans le plan focal et muni de grilles formées de zones transparentes et opaques pour produire en mode passif une modulation liée à la vitesse de rotation, un filtre optique (3), un dispositif photo-détecteur (4) du rayonnement modulé, et des circuits de traitement et d'écartométrie (7) des signaux détectés élaborant les signaux d'écart représentatifs du dépointage angulaire de l'objet par rapport à l'axe optique, et dans lequel un objectif intermédiaire (5-15) dit d'écartométrie est disposé entre les grilles et le détecteur (4), celui-ci étant du type à quatre quadrants pour élaborer les signaux d'écart à partir des signaux respectifs des quadrants et consécutivement séparer la fonction d'écartométrie de celles de filtrage spatial et de modulation procurées par les grilles, les circuits de traitement et d'écartométrie comportant quatre voies de réception issues du détecteur à quatre quadrants et traitées par sommations dans un circuit d'écartométrie (51) pour produire les signaux conventionnels Δx, Δy et Σ d'écartométrie, ces derniers étant transmis respectivement à trois circuits de démodulation (53-1 à 53-3) correspondant à la modulation créée par les grilles, le système étant caractérisé en ce que les grilles (2) sont réalisées de manière à être totalement transparentes pour le rayonnement produit par un illuminateur laser annexe (9) modulé selon une modulation distincte de celle créée par les grilles, et qu'il comporte des circuits de traitement additionnels (60-1 à 3, 22) pour démoduler les signaux laser détectés, ainsi que des circuits de commutation (62-1 à 3, 24) et de sélection (63, 23) des modes de fonctionnement passif et semi-actif pour l'obtention des données d'écartométrie correspondantes.

2. Système selon la revendication 1, caractérisé en ce que les grilles (2) sont réalisées en sorte que les zones opaques (11) constituent un filtre interférentiel transparent seulement pour le rayonnement laser, les zones restantes (10) étant transparentes pour les deux modes de fonctionnement.

3. Système selon la revendication 2, caractérisé en ce que les grilles sont formées par un support plan transparent (12) pour les deux modes et sur une face duquel est déposé un matériau formant les zones opaques (11) en mode passif et ledit filtre interférentiel en mode semi-actif.

4. Système selon l'une quelconque des revendications 1 à 3, destiné à fonctionner en mode semi-actif avec un illuminateur laser à émission continue modulée, caractérisé en ce que les circuits de traitement additionnels consistent en trois circuits de démodulation (60-1 à 3) de la modulation laser, alimentés respectivement par les signaux $\Delta x$, $\Delta y$ et $\Sigma$ et connectés par leur sortie ainsi que les circuits de démodulation grilles (53-1 à 3) respectivement à trois circuits de commutation de voie (62-1 à 3) commandés à partir d'un circuit de décision (63).

5. Système selon la revendication 4, caractérisé en ce que les circuits de démodulation laser sont constitués par des filtres accordables à commande numérique commandés par un circuit (61) en fonction de la fréquence (F2) de modulation de l'illuminateur laser (9).

6. Système selon l'une quelconque des revendications 1 à 3, destiné à fonctionner en mode semi-actif avec un illuminateur laser à impulsions, caractérisé en ce que les circuits de traitement et d'écartométrie comportent une première chaîne (21) pour le mode passif et une deuxième chaîne (22) pour le mode semi-actif, et un circuit logique de décision (23) de mode qui commande un circuit commutateur (24) pour le prélèvement des signaux d'écart de la chaîne correspondante.

7. Système selon la revendication 6, caractérisé en ce que les quatre voies de détection issues du détecteur (4) alimentent en parallèle les deux chaînes de traitement.

8. Système selon la revendication 6 et dans lequel l'illuminateur laser émet dans une bande spectrale extérieure à la bande de détection prévue en mode passif, caractérisé en ce que le dispositif détecteur se compose de deux détecteurs (4, 14) à quatre quadrants pour alimenter respectivement les deux chaînes de traitement (21-22).

9. Système selon la revendication 8 et comportant, un détecteur infrarouge à quatre quadrants refroidi par un cryostat, à l'avant du détecteur une couche déposée en un matériau formant ledit filtre optique dans la bande IR prévue en mode passif, caractérisé en ce que le détecteur laser à quatre quadrants est réalisé par une couche (14) déposée à l'avant du filtre froid (3).

10. Système selon l'une quelconque des revendications 1 à 9, appliqué à réaliser un système auto-directeur à fonctionnement bimode, passif ou semi-actif.

**Claims**

1. Optoelectric system for the detection and angular localization of a luminous object, adapted for bimodal operation, i. e. a passive mode and a semi-active mode, comprising an optic reception and focusing objective (1), a rotating disc (2) arranged in the focal plane and provided with gratings formed of transparent and opaque zones for producing a modulation related to the rotational speed in the passive mode, an optic filter (3), a photodetector device (4) for detecting the modulated radiation, and processing and deviation measurement circuits (7) for processing the detected signals into deviation signals representing the angular deviation of the object from the optic axis, and in which an intermediate objective (5-15), termed deviation measurement objective, is interposed between the gratings and the detector (4) which is of four quadrant type, for generating the deviation signals from the respective quadrant signals and subsequently separating the deviation measurement function from the spatial filtering and modulation functions provided by the gratings, the processing and deviation measurement circuits comprising four reception channels derived from the four quadrant detector and processed by summing operations in a deviation measurement circuit (51) for producing conventional deviation measurement signals $\Delta x$, $\Delta y$ and $\Sigma$, the latter being respectively transmitted to three demodulation circuits (53-1 to 53-3) the demodulation of which corresponds to the modulation provided by the gratings, the system being characterized in that the gratings (2) are formed in a manner to be totally transparent to the radiation produced by an auxiliary laser illumination source (9) modulated in a manner which is different from the modulation produced by the gratings, and that it comprises additional processing circuits (60-1 to 3, 22) for demodulation of the detected laser signals as well as switching circuits (62-1 to 3, 24) and selection circuits (63, 23) for selecting the passive and semi-active operation modes for obtaining the corresponding deviation measurement data.

2. System in accordance with claim 1, characterized in that the gratings (2) are formed in such a manner that the opaque zones (11) form an interference filter which is transparent only to the laser radiation, the remaining zones (10) being transparent in both modes of operation.

3. System in accordance with claim 2, characterized in that the gratings are formed, for both modes, of a plane transparent support (12) on one face of which a material is deposited which forms the opaque zones (11) in the active mode and said interference filter in the semi-active mode.

4. System in accordance with any of claims 1 to 3, adapted for the semi-active mode of operation using a continuous emission, modulated laser source, characterized in that the additional processing circuits consist of three demodulation circuits (601 to 3) for demodulation of the laser modulation, respectively fed by the signals $\Delta x$, $\Delta y$ and $\Sigma$ and having outputs which are, just as those of the grating demodulation circuits (53-1 to 3), connected to three channel switching circuits (62-1 to 3), respectively, controlled by a decision circuit (63).

5. System in accordance with claim 4, characterized in that the laser demodulation circuits are formed of digitally controlled tunable filters controlled by a circuit (61) in dependence on the modulation frequency (F2) of the laser illumination source (9).

6. System in accordance with any of claims 1 to 3, adapted for operation in the semi-active mode using a pulse laser illumination source, characterized in that the processing and deviation measurement circuits comprise a first branch (21) for the passive mode and a second branch (22) for the semi-active mode, and a logic mode decision circuit (23) controlling a switching circuit (24) for deriving the deviation signals from the corresponding branch.

7. System in accordance with claim 6, characterized in that the four detection channels derived from the detector (4) feed the two processing branches in parallel.

8. System in accordance with claim 6 and in which the laser illumination source emits within a spectral range which is outside the detection range provided for the passive mode, characterized in that the detector device is composed of two four quadrant detectors (4, 14) for feeding the two processing branches (21-22), respectively.

9. System in accordance with claim 8 and comprising an infrared, four quadrant detector cooled by a cryostat, a layer deposited in front of the detector and formed of a material forming said optic filter within the IR range provided for the passive mode, characterized in that the four quadrant laser detector is formed by a layer (14) deposited in front of the cooled filter (3).

10. System in accordance with any of claims 1 to 9, used for forming and auto-directive bimodal, passive or semi-active, operation system.

### Ansprüche

1. System zur optoelektrischen Detektion und Winkellokalisation eines leuchtenden Objektes für den Betrieb in zwei Betriebsarten, nämlich einer passiven und einer halbaktiven Betriebsart, mit einem optischen Empfangs- und Fokussierobjektiv (1), einer rotierenden Scheibe (2), die in der Brennebene angeordnet und mit Gittern versehen ist, die aus lichtdurchlässigen und lichtundurchlässigen Zonen gebildet sind, zur Erzeugung einer von der Rotationsgeschwindigkeit abhängenden Modulation in der passiven Betriebsart, mit einem optischen Filter (3), einer Fotodetektorvorrichtung (4) zur Detektion der modulierten Strahlung und mit Verarbeitungs- und Ablagemeßschaltungen (7) zur Verarbeitung der erfaßten Signale zu Ablagesignalen, die den Ziel-Fehlwinkel des Objektes in bezug auf die optische Achse darstellen, worin ein als Ablagemeßobjektiv bezeichnetes Zwischenobjektiv (5-15) zwischen den Gittern und dem Detektor (4) angeordnet ist, der seinerseits vom Typ mit vier Quadranten ist, zur Erzeugung der Ablagesignale ausgehend von den jeweiligen Quadrantensignalen und zur anschließenden Trennung der Ablagemeßfunktion von den Funktionen der räumlichen Filterung und der Modulation, die durch die Gitter erfüllt werden, wobei die Verarbeitungs- und Ablagemeßschaltungen vier von dem Vierquadrantendetektor ausgehende Empfangskanäle aufweisen, die in einer Ablagemeßschaltung (51) durch Summierungen verarbeitet werden, um die herkömmlichen Ablagesignale $\Delta x$, $\Delta y$ und $\Sigma$ zu erzeugen, die jeweils einer von drei Demodulationsschaltungen (53-1 bis 53-3) zugeführt werden, deren Demodulation der durch die Gitter erzeugten Modulation entspricht, wobei das System dadurch gekennzeichnet ist, daß die Gitter (2) so ausgebildet sind, daß sie vollkommen durchlässig sind für die von einer Hilfslaserquelle (9) erzeugte Strahlung, die mit einer Modulation, die verschieden von der durch die Gitter erzeugten ist, moduliert wird, und daß es zusätzliche Verarbeitungsschaltungen (60-1 bis 3, 22) zum Demodulieren der erfaßten Lasersignale sowie Schaltkreise (62-1 bis 3, 24) und Selektionskreise (63, 23) zum Auswählen der passiven und der halbaktiven Betriebsweise umfaßt, zum Erhalten der entsprechenden Ablagemeßdaten.

2. System nach Anspruch 1, dadurch gekennzeichnet, daß die Gitter (2) derart ausgebildet sind, daß die lichtundurchlässigen Zonen (11) ein Interferenzfilter bilden, das nur für die Laserstrahlung durchlässig ist, während die übrigen Zonen (10) für beide Betriebsarten lichtdurchlässig sind.

3. System nach Anspruch 2, dadurch gekennzeichnet, daß die Gitter für beide Betriebsarten aus einem ebenen, lichtdurchlässigen Träger (12) gebildet sind, auf dessen einer Fläche ein Material aufgebracht ist, welches die lichtundurchlässigen Zonen (11) für die passive Betriebsart und das Interferenzfilter für die halbaktive Betriebsart bildet.

4. System nach einem der Ansprüche 1 bis 3, welches dazu bestimmt ist, in der halbaktiven Betriebsart mit einer kontinuierlich arbeitenden, modulierten Laserbeleuchtungsquelle zu arbeiten, dadurch gekennzeichnet, daß die zusätzlichen Verarbeitungsschaltungen aus drei Demodulationsschaltungen (60-1 bis 3) zum Demodulieren der Lasermodulation bestehen, denen die Signale $\Delta x$, $\Delta y$ bzw. $\Sigma$ zugeführt werden und deren Ausgänge ebenso wie die der Gitter-Demodulationsschaltungen (53-1 bis 3) jeweils mit einem von drei Kanal-Schaltkreisen (62-1 bis 3) verbunden sind, die durch eine Entscheidungsschaltung (63) gesteuert sind.

5. System nach Anspruch 4, dadurch gekennzeichnet, daß die Laser-Demodulationsschaltungen aus digital gesteuerten abstimmbaren Filtern gebildet sind, die durch eine Schaltung (61) in Abhängigkeit von der Modulationsfrequenz (F2) der Laserbeleuchtungsquelle (9) gesteuert sind.

6. System nach einem der Ansprüche 1 bis 3, das dazu bestimmt ist, im halbaktiven Betrieb mit einer Pulslaser Beleuchtungsquelle zu arbeiten, dadurch gekennzeichnet, daß die Verarbeitungs- und Ablagemeßschaltungen einen ersten Schaltungszweig (21) für die passive Betriebsart und einen zweiten Schaltungszweig (22) für die halbaktive Betriebsart sowie eine logische Betriebsart-Entscheidungsschaltung (23) umfassen, die einen Umschalter (24) zum Abgreifen der Ablagesignale des entsprechenden Schaltungszweiges steuert.

7. System nach Anspruch 6, dadurch gekennzeichnet, daß die vier Detektionskanäle, die von dem Detektor (4) ausgehen, die zwei Verarbeitungszweige parallel speisen.

8. System nach Anspruch 6, bei welchem die Laserbeleuchtungsquelle in einem Spektralbereich aussendet, der außerhalb des für die passive Betriebsart vorgesehenen Detektionsbandes liegt, dadurch gekennzeichnet, daß die Detektorvorrichtung zusammengesetzt ist aus zwei Vierquadrantendetektoren (4, 14), die jeweils einen der beiden Verarbeitungszweige (21-22) speisen.

9. System nach Anspruch 8, welches einen Vierquadranten-Infrarotdetektor enthält, der durch einen Kryostat gekühlt ist, wobei vor dem Detektor eine Schicht aus einem Material aufgebracht ist, welches das optische Filter in dem Infrarotbereich bildet, der in der passiven Betriebsart vorgesehen ist, dadurch gekennzeichnet, daß der Vierquadranten-Laserdetektor aus einer Schicht (14) gebildet ist, die vor dem kalten Filter (3) aufgebracht ist.

10. System nach einem der Ansprüche 1 bis 9, angewendet auf die Verwirklichung eines automatischen Richtsystems, das in zwei Betriebsarten arbeitet, in der passiven oder halbaktiven Betriebsart.

FIG_1

FIG_2

FIG_3

FIG_4

FIG_6

FILTRAGE EN MODE SEMI-ACTIF

COMMUTATION DE MODE

FILTRAGE EN MODE PASSIF

Y

X

4

V1
V2
V3
V4

50·1
50·2
50·3
50·4

51

ECARTOMETRIE

ΔX
ΔY
Σ

52·1
52·2
52·3

53-1
53-2
53-3

54

60-1
60-2
60-3

61

62-1
62-2
62-3

55-1
55-2

DEMODULATEURS SYNCHRONES

COMMANDES D'ACCORD DES FILTRES SELECTIFS

58
DETECT· NIVEAU

56-2
FILTRE PASSE_BAS

56-1
FILTRE PASSE_BAS

AGC

59
COMP.

ES

EG

63
LOGIQUE DECISION

S11

VR1

SE

0 012 060

2

0 012 060

# FIG_5

# FIG_7

# FIG_8

3